(19) Europäisches Patentamt
European Patent Office
Office européen des brevets

(11) Publication number: **0 540 106 A1**

# (12) EUROPEAN PATENT APPLICATION

(21) Application number: **92203286.7**

(51) Int. Cl.$^5$: **C08K 5/01**

(22) Date of filing: **27.10.92**

(30) Priority: **31.10.91 IT MI912896**

(43) Date of publication of application:
**05.05.93 Bulletin 93/18**

(84) Designated Contracting States:
**BE CH DE ES FR GB IT LI NL SE**

(71) Applicant: **ECP ENICHEM POLIMERI S.r.l.**
**16, Piazza della Repubblica**
**I-20124 Milano(IT)**

(72) Inventor: **Casarini, Andrea**
**Via Concetto Marchesi 8**
**I-20067 Paullo, Milan(IT)**
Inventor: **Venti, Paolo**
**Via Andorra 8**
**I-35020 Padova(IT)**
Inventor: **Moro, Alessandro**
**Via Molinella 37**
**I-30030 Cazzago di Pianiga, Venice(IT)**
Inventor: **Pippa, Roberto**
**Via Perosi, 14**
**I-30033 Noale, Venice(IT)**
Inventor: **Pernice, Roberto**
**Via Carducci, 54**
**I-30171 Venice-Mestre(IT)**

(74) Representative: **Roggero, Sergio et al**
**Ing. Barzanò & Zanardo Milano S.p.A. Via Borgonuovo 10**
**I-20121 Milano (IT)**

## (54) Stabilized polymeric compositions based on poly(phenylene ether).

(57) Compositions based on poly(phenylene ether) and/or its blends with styrene resins are thermally stabilized by adding at least one compound belonging to the group of isoprenoids.
These compositions are used in the fields of medicine, biology (sterilization), in the moulding of components for electrical and electronical machines, parts for automobiles etc.

EP 0 540 106 A1

The present invention relates to stabilized polymeric compositions based on poly(phenylene ether).

More specifically, the present invention relates to polymeric compositions based on poly(phenylene ether) alone or mixed with at least one (co)polymer of styrene having improved fluidity in its molten state and thermal stability.

It is already known that poly(phenylene ethers) (PPE), deriving from the (co)polymerization by oxidative coupling of one or more substituted phenols cannot easily be used alone owing to the high viscosity values in the molten state, the consequent high operating temperatures and the high degree of thermo−oxidative susceptibility shown by colour variations (darkening), partial cross−linking and gelification of the polymer during processing.

The fortunate combination of PPE with one or more styrene resins however, enables the operating temperature to be considerably lowered and produces more easily processable resins with a reciprocal improvement in the intrinsic properties of the constituents. In this way, by varying the ratios between the poly(phenylene ether) and the styrene polymer and depending on the application requirements, it is possible to obtain compositions with improved shock−resistance and processability, or compositions with improved resistance to heat and flame, better impact strength and improved technological properties.

It is known however that not only PPE but also its alloys with styrene homo− and copolymers, can, in spite of the above improvements, undergo an alteration in the molecular structure at the high transformation temperatures of the end−products.

With particular reference to poly(phenylene ether), degradative thermal processes can be noted together with a consequent decrease in the molecular dimensions and/or bonds between macromolecules caused by radicalic processes favoured by the oxygen in the air and promoted by the presence of catalytic residues. These bonds in the case of PPE obtained by the oxidative coupling of 2,6−dimethylphenol are caused by the methyl groups present in the polymeric chain as substituents of the benzene ring in positions 2 and 6.

The overall effect of this alteration is to generally cause a decrease, although limited, in the number average molecular weight of the poly(phenylene ether) and an increase in some cases in the weight average molecular weight, with a consequent variation in the molecular weight distribution.

When the cross−linking action is particularly vigorous varying quantities of gel can be formed.

It is known to experts in the field that the degradative effects of heat can be considerably limited with the help of suitable stabilizers belonging to different groups of compounds with different degrees of effectiveness such as: alkyl and/or aryl phosphites, phenols wherein the characterizing function is protected by substituent groups of great sterical hindrance, thioethers of esters of aliphatic carboxylic acids, dithiocarbamates of heavy metals, 2−mercaptobenzyimidazol, 2−mercaptobenzotriazol, 2,4−bis(n−octylthio)−6−(4−hydroxy−di−t−butyl−aniline)−1,3,5 triazine, hexamethylphosphoramide, etc.

Viceversa, the cross−linking reactions provoked by radicalic processes are not governed by the above additives and generally require the use of chemical compounds with special structures.

These compounds, probably make the radicalic systems present in a latent state in the poly(phenylene ether) inert; their effects becoming manifest when the material is heated to high transformation temperatures.

Modern transformation technology requires polymeric material to have suitable thermal stability capable of controlling the variations in the molecular weight within restricted limits, thus guaranteeing an almost constant fluidity, which is a necessary condition for ensuring end−products with satisfactory technological properties, at a high hourly production.

Patent literature indicates several compounds as effective additives for thermally stabilizing poly (phenylene ether) and/or its alloys with polystyrene polymers preserving the fluidity of the molten material at an adequate level.

These products are, for example, conjugated dienic compounds, ethylenic dienophyls and their precursors.

European Patent Application No.121974 cites cyclopentadiene, N alkyl or arylsubstituted maleimide, acenaphthylene, indene, maleic anhydride, mixtures of maleic anhydride with primary amines.

The use of imides of maleic acid is claimed in European Patent Application No.222246; whereas European Patent Application No.257486 describes the use of alkyl and/or alkylaryl esters of maleic and fumaric acid as heat stabilizing agents.

The present invention is based on the extremely surprising experimental observation that some compounds, not belonging to the groups mentioned above, are capable of giving poly(phenylene ether) and its alloys with styrene polymers, a long−lasting thermal stability in the molten state and of guaranteeing a fluidity suitable of ensuring an improved processability. In addition, these compounds significantly improve the optical characteristics of these materials.

The additives of the present invention, capable of giving poly(phenylene ether) and its alloys with (co)-polymers of styrene improved thermal stability and improved optical characteristics, belong to the group of isoprenoid compounds.

The term "isoprenoid compounds", as used in the present description and claims, includes all chemical compounds characterized in that their basic structures can be schematized as multiples of the isoprenic structure

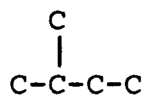

(I)

and have therefore a number of carbon atoms equal to 5n, where n is an integer between 2 and 12.

The isoprenoid compounds used for the purposes of the present invention are also characterized in that they contain in their molecule one or more ethylenic unsaturations provided they are not conjugated. Moreover, the hydrogen atoms linked to the 5n carbon atoms of basic structure (I) can also be partly substituted by other atoms and chemical groups, specified further on.

It has also been found that the addition of at least one isoprenoid compound, according to the present invention, to poly(phenylene ether) alone or to its blends with (co)polymers of styrene, even in very low concentrations, of about 0.05-10 parts by weight per 100 parts of polymer or its blends, causes a decrease in the entity of the reactions which lead to an increase in the molecular dimensions of the poly (phenylene ether), thus obtaining a considerable improvement in the fluidity with the same operating and transformation conditions.

In the case of blends of poly(phenylene ether) with (co)polymers of styrene, the isoprenoid compounds, according to the present invention, also diminish the entity of the reactions which cause both a decrease in the molecular dimensions of the polystyrene and an increase in the degree of cross-linking of the rubbery phase of the polystyrene, if any.

The action of the isoprenoid compounds of the present invention is therefore also manifested by an improved resiliency.

The present invention consequently relates to polymeric compositions including at least one poly (phenylene ether), possibly mixed with at least one (co)polymer of styrene, and at least one isoprenoid compound.

Examples of isoprenoid compounds are those composed of 2 isoprenic units (n = 2) such as limonene (or its racemic mixture dipentene) which can be obtained from isoprene by thermal treatment at 280°C; according to the following scheme:

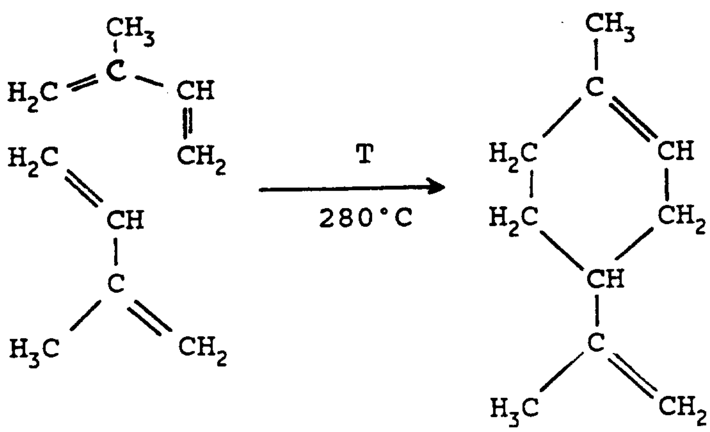


dl-limonene

(dipentene)

where the dimerization can be considered as a Diels-Alder reaction including the 1,4 addition of one isoprene molecule to the 1,2 position of the other.

Other isoprenoid structures composed of two isoprenic units are bridged bicyclic terpenes existing in nature as Carene, sabinene, $\alpha$- and $\beta$-pinene etc.

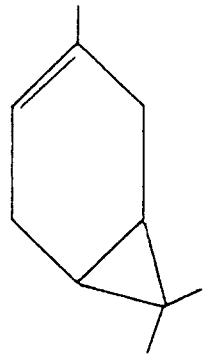
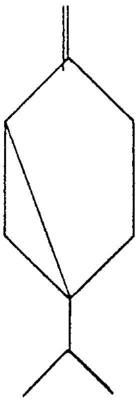
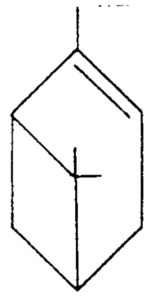
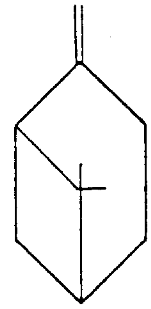

Carene Sabinene α-Pinene β-Pinene

Isoprenoid compounds composed of two isoprenic units (n = 2) also include those containing oxygen atoms, such as geraniol

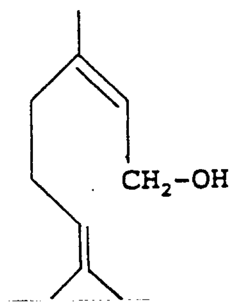

(Geraniol)

its cyclization product α – terpineol

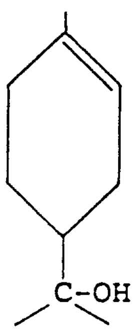

α-terpineol

and citronellol

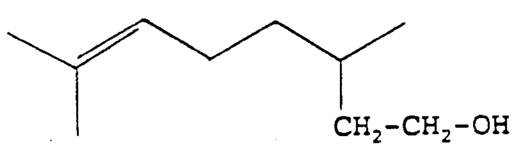

(citronellol)

Compounds with 3 isoprenic units include, for example, farnesol

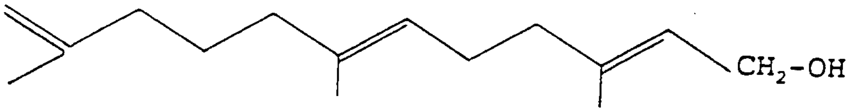

Farnesol

Further examples of isoprenoid compounds containing 3 isoprenic units are Cadinene

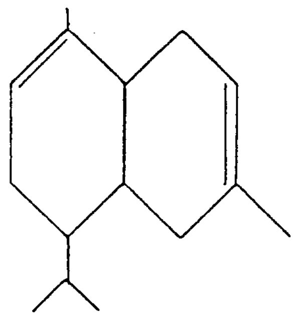

(Cadinene)

and bisabolene, etc.

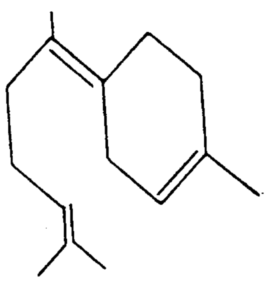

(·bisabolene)

Isoprenoid compounds containing 4 isoprenic units include, for example, camphorene,

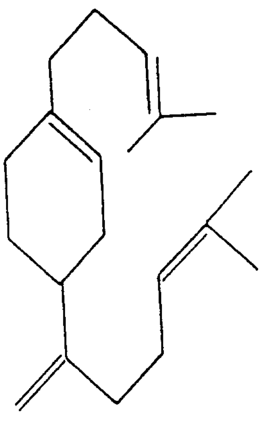

d-pimaric acid, etc.

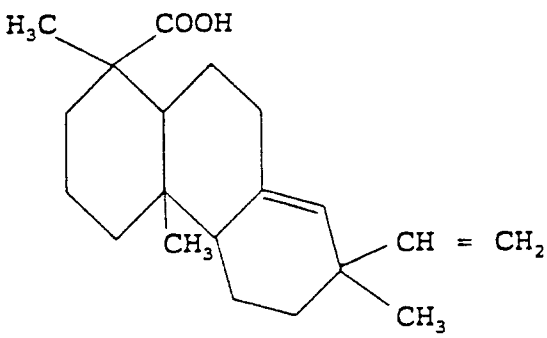

d-pimaric acid

Other examples of isoprenoid compounds are those containing 6 isoprenic units, generally known as triterpenic derivatives among which squalene. Squalene is a linear isoprenoid with a molecular formula $C_{30}H_{50}$ and containing 6 unconjugated double bonds.

The isoprenoid compounds specified above are illustrative examples but are not limiting for the purposes of the present invention.

Moreover, as is known to experts in the field, numerous other basic structures resulting from the junction of at least two isoprenic units having formula (I) can be identified.

In addition, the hydrogen atoms linked to the 5n carbon atoms of the basic structures can be totally or partly substituted by other atoms or radicals independently selected from the following:

a. halogens, such as fluorine, chlorine, bromine;

b. hydrocarbon radicals, such as alkyl radicals, cycloalkyl, aryl, alkenylic, cycloalkenylic, arylalkyl, alkylaryl, haloalkylaryl, haloalkyl, haloaryl, terpenic, aroyl, acylic radicals, and also radicals deriving from innumerous substitutions in the above-listed radicals;

c. double-bond radicals, such as oxo$=$O; radical $=$ NH; radical $=$ $NR^1$; methylene radical $=$ $CH_2$; partially substituted methylene radical $=$ $CHR^1$; totally substituted methylene radical $=$ $CR^1R^2$; wherein $R^1$ and $R^2$, independently of each other, are selected from the radicals listed under b) excluding acylic and aroylic radicals;

d. radicals: $-OR^3$; $-CO-OR^3$; $-N(R^3)_2$ wherein each $R^3$ may independently represent a hydrogen or one of the radicals listed under b).

e. radicals $-CO-R^4$; $-CO-N(R^4)_2$ wherein $R^4$ may be a hydrogen or one of the radicals listed under b. excluding acylic and aroylic radicals. For the purposes of the present invention it is not strictly necessary for all the isoprenic sequences theoretically present in a molecule to be integral, i.e. some methyl, methylenic, isopropylic, isopropylidenic, isopropenylic groups theoretically derivable from the junction of isoprenic n units may not be present in the molecules of the compounds useful for the purposes of the present invention.

However, in the case of acyclic, monocyclic or bicyclic bridged structures, the sequence of carbon atoms of at least one isoprenic unit is integral and the number of the carbon atoms of the molecule cannot be lower than nine.

In the case of bi, tri and polycyclic structures the sequences of carbon atoms of at least two isoprenic units, even if separated from one another, are integral.

For purely illustrative purposes and without constituting any limitation, the isoprenoid compounds of the present invention, capable of giving poly (phenylene ether) and its blends with homo and copolymers of

styrene improved thermal stability and improved rheological, mechanical and optical characteristics, include the following products: nerol, nerylacetate, nerylacetone, geraniol, geranylacetate, geranylacetone, $\beta$-citronallene, linalol, linalylacetate, terpinolene, $\beta$-terpinene, $\gamma$-terpinene, trans-isolimonene, R(+)-limonene, S(-)-limonene, dipentene, $\alpha$-terpineol, terpinen-4-ol, isopulegol, citral, $\alpha$-cyclocitral, mentene, $\alpha$-pinene, $\beta$-pinene, camphene, 3-carene, 2-carene, tuyene, farnesol, farnhexylacetate, farnhexylmethylether, nerolidol, cadinene, selinene, bisabolene, squalene, camphorene, d-pimaric acid, ursolic acid, myrtenol, 6,6-dimethyl-2-norpinene-2-ethanol, verbenol, aristolene, calarene, cedrene, gurinnene, isolongipholene, dihydromyrcene.

The scope of the present invention also includes terpine, which can be considered a precursor of some of the terpenes listed above, such as $\alpha$-terpineol, limonene and terpinolene.

Particularly suitable for the purposes of the present invention are terpinolene, dipentene and squalene.

These compounds can be used alone or as a mixture of two or more of them as stabilizing agents. They are effective in very low concentrations and ranging from 0.05 to 10 parts by weight for every 100 parts by weight of poly(phenylene ether) possibly mixed with homo and copolymers of styrene. The best results are obtained with quantities of additive ranging from 0.1 to 3 parts by weight for every 100 parts by weight of poly(phenylene ether) or its blends.

Said stabilizing compounds can be introduced into the poly(phenylene ether) or its blends with (co)-polymers of styrene, using any of the known techniques for this particular purpose.

Poly(phenylene ethers) (PPE) are known compounds and are available on the market. They are described in numerous patents and are generally obtained by the oxidative coupling, in the presence of a suitable catalyst, of one or more alkylphenols, the most widely used being 2,6-dimethylphenol. The PPEs correspond to the following general formula:

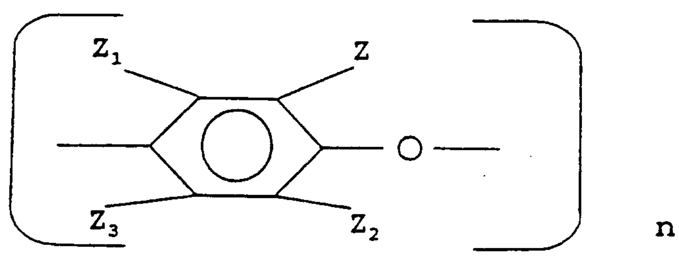

(II)

where Z, $Z_1$, $Z_2$, $Z_3$, are, independently from each other, hydrogen, chlorine, bromine, fluorine, alkyl, substituted alkyl, cycloalkyl, substituted cycloalkyl, phenyl, substituted phenyl and n represents the total number of monomeric units and is an integer higher than 50.

Non-limiting examples of PPE which can be used in the production of the polymeric compositions of the present invention and corresponding end-products are:

poly(2,6-dimethyl-1,4-phenylenether);
poly(2,6-diethyl-1,4-phenylenether);
poly(2-methyl-6-ethyl-1,4-phenylenether);
poly(2-methyl-6-propyl-1,4-phenylenether);
poly(2,6-dipropyl-1,4-phenylenether);
poly(2,3,6-trimethyl-1,4-phenylenether);
poly(2-chloro-1,4-phenylenether);
poly(2-bromo-1,4-phenylenether);
poly(2-phenyl-1,4-phenylenether);
poly(2-chloro-6-bromo-1,4-phenylenether);
poly(2,6-dichloro-1,4-phenylenether).

The PPE preferably used for the purposes of the present invention is poly(2,6-dimethy1-1,4-phenylenether), wherein in formula (II) $Z_1 = Z_3 = H$; $Z = Z_2 = CH_3$.

It has an weight average molecular weight $\overline{M}w$ of between 8.000 and 80.000 g/mole and more specifically within the range 15.000÷60.000, and an intrinsic viscosity, measured in chloroform at 25°C, of between 0.3 and 0.7 dl/g.

Also suitable for the purposes of the present invention are PPEs obtained by the oxidative coupling of 2 or more different phenols. Generally in these copolymers one of the 2 or more monomeric components is composed of 2,6-dimethylphenol and the other may be 2,3,6-trimethylphenol.

It is known that the oxidative condensation of alkylphenols is generally catalyzed by complexes of cupric salts with aliphatic amines, complexes of manganese, cobalt etc. The present invention should however be considered independently of the catalytic system used.

The (co)polymers of styrene (or styrene resins), suitable for the purposes of the present invention, are all polymers, copolymers, interpolymers, random or block, linear or branched or graft, containing styrene units. They also include polymers of styrene made shock-resistant by the addition of a rubber such as polybutadiene block SB or SBS rubber etc.

Examples of these resins are polystyrene (PS), shock-resistant polystyrene (HIPS), polystyrene grafted on any polymeric substrate, either plastic or thermoplastic, ABS resins, SBR rubbers, linear or star-shaped polymers based on polystyrene or grafted with polystyrene, various copolymers or interpolymers of styrene with different monomers, such as the copolymer styrene-maleic anhydride (sty-maleic) and styrene-maleimide, styrene-acrylic acids, styrene-(meth)-acrylates, acrylonitrile-styrene acrylates, methacrylate-acrylonitrile-butadiene-styrene etc.

Styrene polymers containing a polybutadiene rubber are preferred.

The preparation of the above styrene resin is well-known to experts in the field.

The polymeric compositions of the present invention generally contain from 1 to 99, preferably from 20 to 80% by weight of poly(phenylene ether), with respect to the total weight of the composition and, correspondingly, from 1 to 99%, preferably from 80 to 20% by weight of styrene resins.

Polymeric blends which have a favourable combination of characteristics such as high mechanical properties, good workability, sufficient thermal stability and flame-resistance, contain 40-60% by weight of poly(phenylene ether) and, correspondingly, 60-40% by weight of a stryrene resin.

The excellent balance of properties of the polymeric compositions of the present invention enable them to be used in a wide variety of fields including applications in the medical and biological field (sterilization), components of electrical and electronic equipment (electrical properties), automobiles (limited water absorption and shock-resistant properties) and generally the substitution of metallic parts (low water absorption, dimensional stability etc.).

The compositions of the present invention may also contain the conventional auxiliary agents such as: plasticizers, primary and secondary antioxidants, detaching agents, slip agents, flame-retardants, antistatics, dyes, pigments, mineral charges, reinforcing agents such as glass fibres, microspheres etc.

When not otherwise indicated, the poly(phenylene ether) used in the following examples was obtained by the oxidatiye coupling of 2,6-xylenol according to the process described in Italian Patent Application No.24024/83.

The samples of homopolymer and its alloys were characteristics by measurements of:

- Intrinsic viscosity [$\eta$]
  This property is determined in a solution of chloroform at 25°C using a Ubbelohde viscometer and is expressed in dl/g.
- Melt Flow Index (MFI)
  The evaluation is carried out at the melt indexer with a load of 10 kg and at a temperature of 270°C according to ASTM-D1238.
- Weight average molecular weight

  $(\bar{M}w)$

  This is measured by the gel permeation chromatography of solutions of polymer in tetrahydrofuran (conc. 0.1%), temperature 25°C. In the case of poly(phenylene ether)/polystyrene blends, the double detector method was used to contemporaneously determine the molecular weight distribution of both the PPE and the polystyrene by means of gel permeation chromatography in tetrahydrofuran (see: A. De Chirico, Eur. Polym. J., Vol. 26, No.6, pages 695-697, 1990).
- Swelling index in toluol of the Gel fraction
  This evaluation requires the previous separation of the Gel fraction by dissolution in toluol at room temperature for 12 h of the soluble phase of the PPE/shock-resistant polystyrene blend, centrifugation of the Gel at 15.000 revs/min at 12°C for 30 min, subsequent washing with toluol and second centrifugation of the Gel under the same conditions.
  The Gel thus separated is left to rest until dripping has been completed, is then conditioned for 5 h in a crystallizer in a toluol atmosphere and weighed ($P_1$).
  The Gel is subsequently dried at 105°C until a constant weight is obtained ($P_2$).

The swelling index is obtained from the formula

$$\frac{P_1-C}{P_2-C}$$

where C represents the weight of pigment and/or charge possibly present in the Gel.

- Optical properties
  These were measured in reflection in the scale L, a, b using a Colorquest CQ 1200 spectrophotometer (D65 illuminant) on injection or compression moulded test samples, depending on the specific cases. The yellow index was measured with the same spectrofotometer according to ASTM D 1925 method.
- Shock-resistance (IZOD)
  This was measured at 23 °C according to the method ASTM D256 (Izod impact with notch) on test samples with a thickness of 3.17 mm obtained, depending on the specific cases, by compression or injection moulding.

The polymeric compositions described in the following examples were obtained with a shock-resistant polystyrene (Edistir SRL 640/2) with a flow index of 2.6 g/10 min measured at 200 °C with a charge of 5 kg and containing polybutadiene as the rubber phase.

These alloys were prepared by extruding the components fed in pre-established ratios using the extruders indicated and under the conditions defined in the various examples.

The experimental examples which follow provide a better illustration of the present invention but do not limit it in any way.

EXAMPLE 1 (and comparative example 1C)

PPE in powder form of commercial origin, obtained with a catalyst based on manganese, and having $\overline{M}_w$ = 41.000; polystyrene made shock-resistant with polybutadiene (Edistir SRL 640/2) having $\overline{M}_w$ = 260.000; terpinolene and the other ingredients listed in Table 1, are fed, in the quantities shown in the same Table, into a twin-screw extruder and extruded at a temperature of 280 °C at a screw rate of 150 revs/min.

The extruded material is cooled with water and cut into pellets.

As a comparison, the operature is repeated without terpinolene (comparative example 1C).

The characterization of both materials is carried out on both the pellets, and test samples obtained by injection moulding in a Battenfeld BA 750/315 CD press, at a temperature of 285 °C.

The results, shown in Table 1, indicate that the addition of terpinolene makes the material more fluid and significantly slows down the process which causes an increase in the molecular weight of the poly-(phenylene ether).

The swelling index of the gel phase also remains higher in the presence of terpinolene owing to a more limited cross-linking of the polybutadiene contained in the shock-resistant polystyrene.

The optical properties of the blend, measured on the injection moulded test samples, are considerably improved with respect to colour purity and luminosity.

EXAMPLES 2, 3, 4 (and comparative examples 2C and 4C)

PPE in powder form of commercial origin, obtained with a catalyst based on Manganese, having [$\eta$] = 0.51 dl/g in chloroform at 25 °C; polystyrene made shock-resistant by means of polybutadiene (Edistir SRL 640/2), having $\overline{M}_w$ = 260.000, the isoprenoid compound indicated each time in Table 2 and the stabilizer ester of phosphorous acid, when present, are mixed, in the quantities shown in Table 2, at a temperature of 280 °C in a twin-screw extruder at a screw-rate of 150 revs/min.

The extruded material is cooled with water and cut into pellets.

As a comparison, the operation is repeated without the isoprenoid derivative (comparative examples 2C and 4C).

The characterization of the materials is carried out on both the pellets and on the test samples obtained by injection moulding in a Battenfeld BA 750/315 CD press, at a temperature of 275 °C.

The results indicated in Table 2 show that the addition of an isoprenoid derivative makes the material more fluid in the molten state, clearer and more resilient with respect to the corresponding blend not containing isoprenoid compounds. In addition the swelling index of the gel phase remains higher in the

presence of isoprenoid compounds.

EXAMPLE 5 (and comparative example 5C)

PPE in powder form having $\overline{M}_w$ = 35.000, polystyrene made shock-resistant by polybutadiene (Edistir SRL 640/2) having $\overline{M}_w$ = 260.000, terpinolene and the other ingredients shown in Table 3, are mixed, in the quantities indicated in Table 3, at a temperature of 285°C, in a twin-screw extruder at a screw-rate of 100 revs/min.

The extruded material is cooled with water and cut into pellets.

As a comparison, the operation is repeated without terpinolene (Comparative example 5C).

The characterization of both materials is carried out on both the pellets and test samples obtained by injection moulding in a Battenfeld BA 750/315 CD press at a temperature of 275°C.

The results indicated in Table 3 confirm that the addition of terpinolene makes the material more fluid and significantly slows down the process which causes an increase in the molecular weight of the poly-(phenylene ether).

The swelling index of the gel phase also remains higher in the presence of terpinolene, owing to a lesser tendency of the polybutadiene contained in the shock-resistant polystyrene to cross-link in the presence of this terpene.

The molecular weight of the polystyrene undergoes a less-accentuated reduction in the presence of terpinolene.

On the whole, the initial characteristics of the PPE, polystyrene and polybutadiene gel change less in the presence of terpene. This has a favourable influence on the resiliency of the blend stabilized with terpinolene, which is considerably higher than that of the blend of the comparative example which does not contain this compound.

Terpinolene also has a positive influence on the optical properties of the blend, as regards purity of colour and luminosity.

EXAMPLE 6 (and comparative example 6C)

PPE in powder form having $\overline{M}_w$ = 41.700, polystyrene made shock-resistant with polybutadiene (Edistir SRL 640/2), having $\overline{M}_w$ = 260.000, and terpinolene are mixed, in the quantities indicated in Table 4, at a temperature of 280°C in a single-screw extruder having a screw diameter of 30 mm and a L/D = 25, with a screw-rate of 60 revs/min.

The extruded material is cooled with water and cut into pellets.

The operation is repeated five times consecutively to evaluate the thermal stability of the material in relation to the number of treatments or, indirectly, to the time.

The samples of material are characterized starting from the second extrusion, to guarantee better homogeneity.

To evaluate the resiliency, the pellet was compression moulded at a temperature of 250°C.

As a comparison, the operation was repeated without terpinolene (Comparative example 6C).

Examination of the results, summarized in Table 4, confirms yet again that terpinolene gives greater fluidity to the composition, together with a better stability of the molecular weight of the PPE, a better stability of the molecular weight of the polystyrene and a lesser degree of cross-linking of the polybutadiene gel, as can be seen from a greater swelling index in toluol.

As a result, the resiliency and its ritention are remarkably improved.

The stabilizing action of terpinolene is also made apparent by the higher luminosity value of the material obtained in its presence.

EXAMPLES 7 and 8 (and comparative example 7C)

PPE in powder form having [$\eta$] = 0.44 dl/g in chloroform at 25°C; polystyrene made shock-resistant with polybutadiene (Edistir SRL 640/2), having $\overline{M}_w$ = 260.000, the mixture of dyes shown in Table 5 and the isoprenoid compound indicated each time in the same Table, are mixed in the quantities shown in the Table, at a temperature of 280°C, in a twin-screw extruder with a screw-rate of 150 revs/min.

The extruded material is cooled with water and cut into pellets.

The operation is repeated as a comparison without the isoprenoid derivative (Comparative example 7C).

The samples of material are characterized both as a granule and as test samples obtained by injection moulding in a Battenfeld BA 750/315 CD press at a temperature of 275 °C and the results are shown in Table 5.

TABLE 1

| COMPOSITION | EXAMPLE 1C | EXAMPLE 1 |
|---|---|---|
| Polyphenylenether | 42 | 42 |
| Edistir SRL 640/2 | 58 | 58 |
| Zinc stearate | 0,3 | 0,3 |
| Ester of phosphorous acid | 0,3 | 0,3 |
| Titanium rutile dioxide | 5 | 5 |
| Ultramarine blue | 0,2 | 0,2 |
| Terpinolene | - | 1 |
| **MECHANICAL PROPERTIES** | | |
| . MFI - 270°C; 10 kg | 7,5 g/10 min | 11,5 g/10 min |
| . $\overline{M}_w$ of PPE | 66.000 g/mole | 54.000 g/mole |
| . Swelling index | 10,6 | 12,1 |
| **OPTICAL PROPERTIES** | | |
| . L | 82,5 | 85,6 |
| . Yellow index | -0,5 | -14 |

TABLE 2

| | EXAMPLE N. | | | | |
|---|---|---|---|---|---|
| COMPOSITION | 2C | 2 | 3 | 4C | 4 |
| Polyphenylenether | 42 | 42 | 42 | 42 | 42 |
| Edistir SRL 640/2 | 58 | 58 | 58 | 58 | 58 |
| Terpinolene | - | 0,6 | - | - | 0,3 |
| Dipentene | - | - | 0,6 | - | - |
| ALKANOX 240 (Ester of phosphorous acid) | - | - | - | 0,6 | 0,6 |
| **PROPERTY** | | | | | |
| . MFI (270°C-10kg) g/10 min | 7,2 | 9,9 | 9,6 | 8,0 | 11,1 |
| . Notch Izod at 23°C as J/m | 191 | 222 | 215 | 195 | 226 |
| . L | 52,5 | 56,5 | 55,5 | 52,5 | 56,1 |
| . Swelling index | 13,7 | 16 | 16,3 | 14,7 | 17,3 |

| TABLE 3 | | |
|---|---|---|
| | EXAMPLE N. | |
| COMPOSITION | 5C | 5 |
| Polyphenylenether | 42 | 42 |
| Edistir SRL 640/2 | 58 | 58 |
| Zinc stearate | 0,3 | 0,3 |
| ALKANOX 240 | 0,3 | 0,3 |
| (Ester of phosphorous acid) | | |
| Titanium rutile dioxide | 5 | 5 |
| Ultramarine bleu | 0,2 | 0,2 |
| Terpinolene | - | 1 |
| | | |
| **MECHANICAL PROPERTIES** | | |
| . MFI - 270°C - 10kg | 14,1 g/10 min | 21,1 g/10 min |
| . Notch Izod at 23°C | 117 J/m | 156 J/m |
| . $\bar{M}_w$ of PPE | 50500 | 43000 |
| . $\bar{M}_w$ of PS | 207000 | 216000 |
| . Swelling index | 10,7 | 11,6 |
| | | |
| **OPTICAL PROPERTIES** | | |
| . a | -5,8 | -6,6 |
| . b | 1,95 | -3,5 |
| . L | 83,8 | 85,2 |
| . Yellow index | -0,7 | -13,2 |

TABLE 4

| | | EXAMPLE N. | | | | | | | |
|---|---|---|---|---|---|---|---|---|---|
| COMPOSITION | | 6C | | | | 6 | | | |
| . PPE<br>. Edistir SRG 640/2<br>. Terpinolene | | 42<br>58<br>- | | | | 42<br>58<br>1 | | | |
| Number of extrusions | | 2 | 3 | 4 | 5 | 2 | 3 | 4 | 5 |
| PROPERTY | UNIT | | | | | | | | |
| . MFI (270°C-10kg) | g/10min | 20,2 | 23,1 | 25,4 | 27,9 | 23,1 | 24,8 | 27,3 | 29,3 |
| . Notch Izod | J/m | 68 | 53 | 43 | 35 | 133 | 109 | 68 | 76 |
| . $\bar{M}w$ of PPE | g/mole | 53000 | 54000 | 58000 | 57000 | 47000 | 48000 | 46000 | 46000 |
| . $\bar{M}w$ of PS | g/mole | 194000 | 188000 | 176000 | 168000 | 219000 | 206000 | 195000 | 189000 |
| . Swelling index | | 6 | 4,9 | 4,3 | 4,8 | 10,3 | 8,4 | 6,6 | 5,6 |
| . L | | 46,6 | 44,7 | 43,4 | 42,9 | 59,4 | 59,1 | 56,5 | 58,3 |

| TABLE 5 | | | |
|---|---|---|---|
| | EXAMPLE N. | | |
| COMPOSITION | 7C | 7 | 8 |
| Polyphenylenether | 42 | 42 | 42 |
| Edistir SRL 640/2 | 58 | 58 | 58 |
| Terpinolene | - | 1 | - |
| Squalene | - | - | 1 |
| Titanium rutile dioxide | 5 | 5 | 5 |
| Ultramarine blue | 0,2 | 0,2 | 0,2 |
| Cadmium red | 0,03 | 0,03 | 0,03 |
| Carbon black | 0,001 | 0,001 | 0,001 |
| **MECHANICAL PROPERTIES** | | | |
| . MFI - 270°; 10kg | 21 | 25,6 | 27,8 |
| . Notch Izod | 118 | 146 | 155 |
| . Swelling index | 11,5 | 12,6 | 13,1 |
| **OPTICAL PROPERTIES** | | | |
| . L | 79,6 | 81,4 | 82,3 |
| . Yellow index | 3,9 | -0,3 | -4 |

## Claims

1. Polymeric compositions including at least one poly(phenylene ether), possibly mixed with at least one (co)polymer of styrene, and at least one isoprenoid compound.

2. Polymeric compositions according to Claim 1, wherein the isoprenoid compound has a structure which can be schematized as a multiple of the isoprene structure:

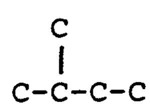

(I)

and has a number of carbon atoms equal to 5n, wherein n is an integer between 2 and 12, and contains one or more unconjugated ethylene unsaturations in the molecule.

3. Polymeric compositions according to Claim 1 or 2, wherein the isoprenoid composition is composed of 2 isoprene units.

4. Polymeric compositions according to any of the previous Claims from 1 to 2, wherein the isoprenoid compound is composed of 3 or 4 isoprene units.

5. Polymeric compositions according to any of the previous Claims from 1 to 2, wherein the isoprenoid compound is composed of 6 isoprenic units.

6. Polymeric compositions according to Claim 2, wherein the hydrogen atoms linked to the 5 n carbon atoms are totally or partially substituted with atoms or radicals selected from:
   a. halogens, such as fluorine, chlorine, bromine;

b. hydrocarbon radicals, such as alkyl, cycloalkyl, aryl, alkenyl, cycloalkenyl, arylalkyl, alkylaryl, haloalkylaryl, haloalkyl, haloaryl, terpenic, aroyl, acylic radicals, as well as radicals deriving from the most varied substitutions in the radicals listed above;

c. double-bond radicals, such as oxo =O; radical =N-H; radical =$NR^1$; methylene radical ≦$CH_2$; partially substituted methylene radical =$CHR^1$; totally substituted methylene radical =$CR^1R^2$, wherein $R^1$ and $R^1$, independently from each other, are selected from the radicals listed in b) excluding acylic and aroyl radicals;

d. radicals: -$OR^3$; -CO-$OR^3$; -$N(R^3)_2$; wherein each $R^3$ may independently represent a hydrogen or one of the radicals listed in b.

e. radicals: -CO-$R^4$; -CO-$N(R^4)_2$; wherein $R^4$ may be a hydrogen or one of the radicals listed in b. excluding acylic and aroyl radicals.

**7.** Polymeric compositions according to Claim 3, wherein the isprenoid compound is terpinolene.

**8.** Polymeric compositions according to Claim 3, wherein the isoprenoid compound is dipentene.

**9.** Polymeric compositions according to Claim 5, wherein the isoprenoid compound is squalene.

**10.** Polymeric compositions according to any of the previous Claims, wherein the quantity of isoprenoid compound is from 0.05 to 10 parts by weight for every 100 parts by weight of the total composition.

**11.** Polymeric compositions according to Claim 10, wherein the quantity of isoprenoid compound is from 0.1 to 3 parts by weight for every 100 parts by weight of the total composition.

**12.** Polymeric compositions according to any of the previous Claims, wherein the poly(phenylene ether) is obtained by the oxidative coupling in the presence of a suitable catalyst of one or more alkylphenols and has the general formula (II)

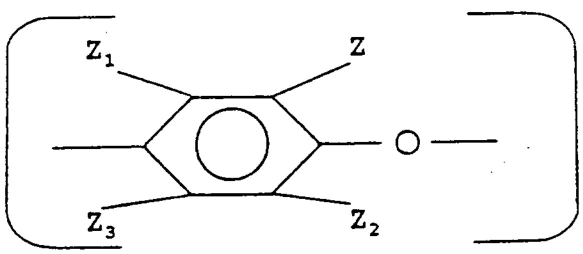

n (II)

wherein Z, $Z_1$, $Z_2$, $Z_3$, are independently selected from the group including hydrogen, chlorine, bromine, fluorine, alkyl, substituted alkyl, cycloalkyl, substituted cycloalkyl, phenyl, substituted phenyl and n represents the total number of monomeric units and is an integer higher than 50.

**13.** Polymeric compositions according to Claim 12, wherein the poly(phenylene ether) is poly(2,6-dimethyl-1,4-phenylene ether) and/or its copolymers obtained from 2,6-dimethylphenol and 2,3,6-trimethylphenol.

**14.** Polymeric compositions according to any of the previous Claims, wherein the poly(phenylene ether) is within the range of 1 to 99% by weight and, preferably, from 20 to 80% by weight; and correspondingly the content of (co)polymer of styrene ranges from 99 to 1%, preferably from 80 to 20% by weight.

**15.** Polymeric compositions according to any of the previous Claims, wherein the (co)polymer of styrene includes homopolymers, copolymers, interpolymers, random or block, linear, branched or graft, containing styrene units, and the polymers of styrene made shock-resistant by the addition of a rubber.

**16.** Polymeric compositions according to any of the previous Claims, containing in addition auxiliary agents such as plasticizers, primary and/or secondary antioxidants, detaching agents, slip agents, flame-retardants, antistatics, dyes, pigments, mineral charges, re-inforcing agents etc.

**17.** Moulded end-products composed of the polymeric compositions claimed in any of the previous points.

European Patent Office

# EUROPEAN SEARCH REPORT

Application Number

EP 92 20 3286

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,Y | DATABASE WPIL<br>Derwent Publications Ltd., London, GB;<br>AN 88-150955<br>& JP-A-63 091 232 (SUMITOMO CHEM IND KK)<br>21 April 1988<br>* abstract *<br>--- | 1-17 | C08K5/01 |
| Y | FR-A-2 542 002 (SODAP)<br>* page 3 - page 6; claims *<br>* page 6, line 13 - line 24 *<br>--- | 1-17 | |
| X | US-A-4 613 699 (JOSEPH GREEN)<br>* the whole document *<br>--- | 1-17 | |
| A | DATABASE WPIL<br>Derwent Publications Ltd., London, GB;<br>AN 91-234971<br>& JP-A-3 153 756 (YASUHARA CHEM KK) 1 July 1991<br>* abstract *<br>--- | 1 | TECHNICAL FIELDS SEARCHED (Int. Cl.5 ) |
| A | EP-A-0 432 696 (HERCULES INCORPORATED)<br>* claims *<br>--- | 1 | C08K<br>C08L |
| A | EP-A-0 343 648 (NIPPON PETROCHEMICALS COMPANY LIMITED)<br>* claims *<br>----- | 1 | |

The present search report has been drawn up for all claims

| Place of search | Date of completion of the search | Examiner |
|---|---|---|
| THE HAGUE | 21 DECEMBER 1992 | DERAEDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)